# EUROPEAN PATENT APPLICATION

(11) **EP 3 667 398 A1**
(43) Date of publication of application: **17.06.2020**
(21) Application number: 20151026.0
(22) Date of filing: 11.01.2017
(51) Int. Cl.: G02B 27/01

(54) **HEAD MOUNTED DEVICE**

(30) Priority: 20.01.2016 JP 2016009309
(62) Divisional of application: 17151071.2
(71) Applicant: CANON KABUSHIKI KAISHA, Ohta-ku Tokyo 146-8501 (JP)
(72) Inventor: NAGATA, Yuya, Ohta-ku, Tokyo 146-8501 (JP); TORIIHARA, Shigeru, Ohta-ku, Tokyo 146-8501 (JP)
(74) Representative: Hitching, Peter Matthew

(57) **Abstract**

A head mounted device configured to be mounted on a head portion of a user when used includes a display unit configured to display an image to the user, a mount unit configured to mount the display unit on the head portion of the user, and a holding member provided to the mount unit and configured to hold the head portion of the user with respect to the mount unit, wherein the holding member includes an elastic member and a packaging member enclosing the elastic member, and an air escape hole is formed in the packaging member, whereby the head mounted device is properly held on the head portion of the user without making the user feel uncomfortable in the head mounted device.

## Description

### BACKGROUND OF THE INVENTION

### Field of the Invention

The present invention relates to a head mounted device configured to be mounted on a head portion of a user when used.

### Description of the Related Art

There has been a head mounted device including a display unit configured to display images, and a user wears the head mounted device on a head portion of the user to use it. Such a head mounted device is called a head mounted display (HMD) and is capable of presenting to a moving user a video image of a virtual object, etc. In recent years, HMDs are increasingly used in various fields.

An HMD is mounted using a mechanism described below. For example, a belt-shaped member is secured around the head portion, or a frontal portion pad and an occipital portion pad are provided and the occipital portion pad is moved forward or backward to push or loosen the head portion. In any case, the HMD mounting mechanism is required to hold the display unit in a position and an orientation so as to enable the user to correctly recognize the video image, and is also required to provide comfort even when the HMD is used for a long time.

Japanese Patent Application Laid-Open No. 2009-111512 discusses a head mounted device including pressing pads respectively provided for a forehead portion, an occipital portion, temporal portions, and side portions of the occipital portion between each of the temporal portions and the occipital portion. Further, the pressing pads for the occipital portion and the side portion of the occipital portion each include a pressing force generation mechanism. When the head mounted device is mounted, pressing force is applied such that the pressing force from the pressing pad for the side portion of the occipital portion is greater than the pressing force from the pressing pad for the occipital portion. This mechanism can securely hold the main body of the device on the head portion without making the user feel uncomfortable in the head mounted device even when the pressing force applied to the head portion is increased. Meanwhile, the display unit is the main body of HMD and accounts for a major portion of the total weight. Thus, even in the case of holding the head mounted device using the mechanism discussed in Japanese Patent Application Laid-Open No. 2009-111512, the pressing force may have to be increased in order to properly hold the display unit in front of the eyes of the user. The pressing pads include an elastic member, but when the pressing force is increased, the user may no longer feel comfortable in the head mounted device. Especially, it is undesirable to press hard on a portion that is sensitive to a press such as a portion near the temporal portions.

### SUMMARY OF THE INVENTION

The present invention is directed to a head mounted device that can be held properly on a head portion of a user without making the user feel uncomfortable in the head mounted device.

According to an aspect of the present invention, there is provided a head mounted device as specified in claims 1 to 12.

Further features of the present invention will become apparent from the following description of exemplary embodiments with reference to the attached drawings.

### BRIEF DESCRIPTION OF THE DRAWINGS

Fig. 1 schematically illustrates a head mounted device.
Figs. 2A and 2B each illustrate an internal structure of a head portion pad.
Figs. 3A, 3B, and 3C schematically illustrate a head portion pad according to a first exemplary embodiment.
Figs. 4A, 4B, and 4C schematically illustrate a head portion pad according to the first exemplary embodiment.
Figs. 5A, 5B, and 5C schematically illustrate a head portion pad according to a second exemplary embodiment.
Figs. 6A, 6B, and 6C schematically illustrate a head portion pad according to the second exemplary embodiment.
Figs. 7A, 7B, and 7C schematically illustrate a head portion pad according to a third exemplary embodiment.
Figs. 8A, 8B, and 8C schematically illustrate a head portion pad according to the third exemplary embodiment.

### DESCRIPTION OF THE EMBODIMENTS

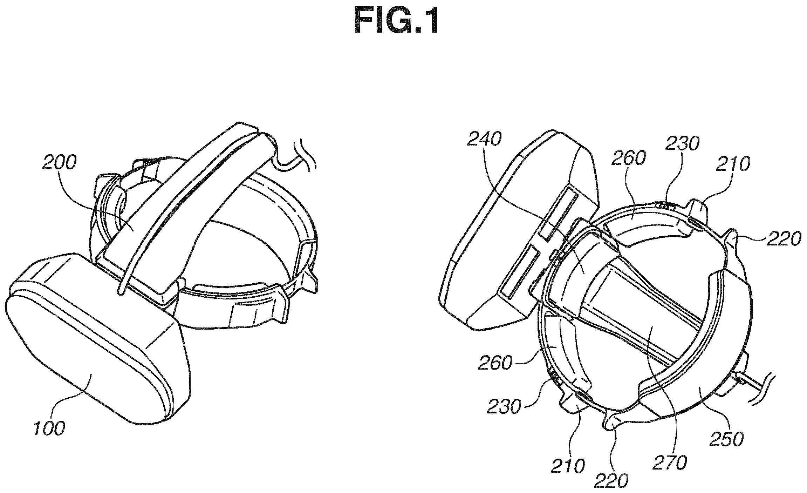

Fig. 1 schematically illustrates a head mounted device according to a first exemplary embodiment. The head mounted device according to the present exemplary embodiment includes an image display unit 100 and a mount unit 200. The following describes the structure in detail. The image display unit 100 provides video images to a user and is to be positioned in front of the eyes of the user. After the image display unit 100 is positioned in front of the eyes of the user by the user, the mount unit 200 is used to hold the image display unit 100 in that position. In a holding mechanism, the mount unit 200 is secured around a head portion by pulling finger handles 210 and 220 toward each other to hold the head mount device . Further, a release button 230 is pressed to release the secured mount unit 200 so that the head mounted device can be removed from the head portion of the user. The hold on the head portion uses pressing force applied to the head portion from a forehead pad 240, an occipital portion pad 250, temporal portion pads 260, and a frontal portion pad 270, which are provide to an inner side of the mount unit 200. The forehead pad 240 is configured to press a forehead portion. The occipital portion pad 250 is a pad for an occipital portion that is configured to press the occipital portion. Each of the temporal portion pads 260 is configured to press a side portion of the head between the forehead portion and a temporal portion. The frontal portion pad 270 is configured to press a frontal portion between the forehead and the top of the head. The foregoing pads have flexibility and are configured to be crushed when the force is applied, and resilience generated when the pads are crushed is used to enable the hold on the head portion. This structure also makes it possible to fit various shapes of the head portion and hold the head mounted device thereon.

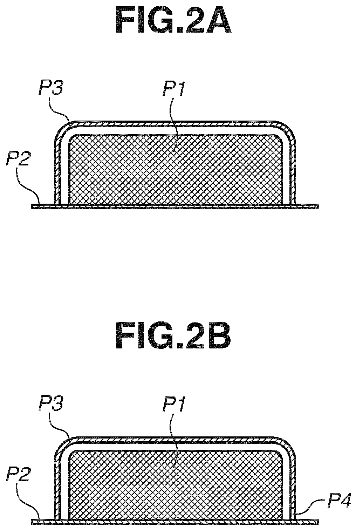

Figs. 2A and 2B each illustrate an internal structure of the forehead pad 240, the temporal portion pads 260, and the frontal portion pad 270. The forehead pad 240 is a pad for the forehead. The temporal portion pads 260 are pads for the temporal portions. The frontal portion pad 270 is a pad for the frontal portion. The foregoing pads each function as a holding member configured to hold the head portion of the user with respect to the mount unit 200 by being deformed and pressing the head portion of the user. Further, the pads are provided to the mount unit 200 as illustrated. Fig. 2A illustrates a pad in which a foamable member P1 (elastic member) is sealed with a plate member P2 and artificial leather P3 (packaging member). While the foamable member is used as the elastic member and the artificial leather as the packaging member in the present exemplary embodiment, other materials may be used. Foamable polyurethane may be used as the foamable member. A gel member may be used as the elastic member. The elasticity of the elastic member reduces the burden on the head portion of the user, and the packaging member protects the elastic member from contamination, etc. Further, in Fig. 2B, an air escape hole P4 is formed in the structure illustrated in Fig. 2A. In the structure illustrated in Fig. 2A, when the mount unit 200 is secured around the head portion of the user, the foamable member P1 is deformed and crushed along the shape of the head portion to generate resilience. In the structure illustrated in Fig. 2B, since the air escape hole P4 is formed in the structure illustrated in Fig. 2A, the speed at which the foamable member P1 in the structure illustrated in Fig. 2B is crushed is faster than the speed at which the foamable member P1 in the structure illustrated in Fig. 2A is crushed.

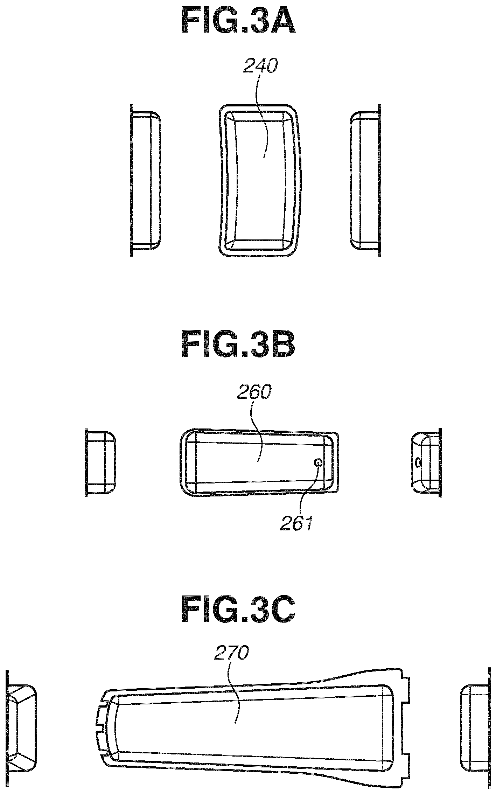

Figs. 3A, 3B, and 3C schematically illustrate the forehead pad 240, one of the temporal portion pads 260, and the frontal portion pad 270 according to the present exemplary embodiment. An air escape hole 261 is formed in the temporal portion pad 260. In this way, when the head mounted device is mounted and the pads are crushed, air in the temporal portion pad 260 is discharged to the outside, so the speed at which the temporal portion pad 260 is crushed is faster than the speed at which the other pads are crushed. Specifically, when the user wears the mount unit 200, the respective temporal portion pads 260 are crushed first completely, so eventually the position of the image display unit 100 can be managed based on an amount by which the forehead pad 240 is crushed. Thus, the temporal portions sensitive to a press can be protected as appropriate.

Accordingly, when the user wears the head mounted device according to the present exemplary embodiment, the distance between the eyes of the user and the image display unit 100 can be set to a predetermined distance with ease without making the user feel uncomfortable in the head mounted device. Moreover, the head mounted device can fit various shapes of the head portion when mounted.

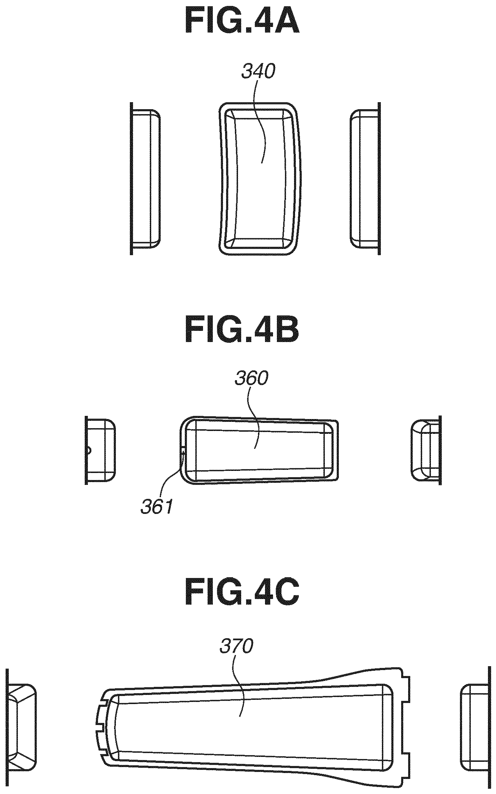

Figs. 4A, 4B, and 4C illustrate structures of a forehead pad 340, a temporal portion pad 360, and a frontal portion pad 370, in which the position of the air escape hole is changed. Fig. 4A illustrates the forehead pad 340. Fig. 4B illustrates the temporal portion pad 360. Fig. 4C illustrates the frontal portion pad 370. An air escape hole 361 is formed in a side surface of the temporal portion pad 360. In this way, the air escape hole 361 is located in a position that is not in contact with the head portion of the user, so air can be discharged from the temporal portion pad 360 without being blocked by the head portion of the user. Further, the discharge of the air can prevent the user from feeling uncomfortable in the head mounted device.

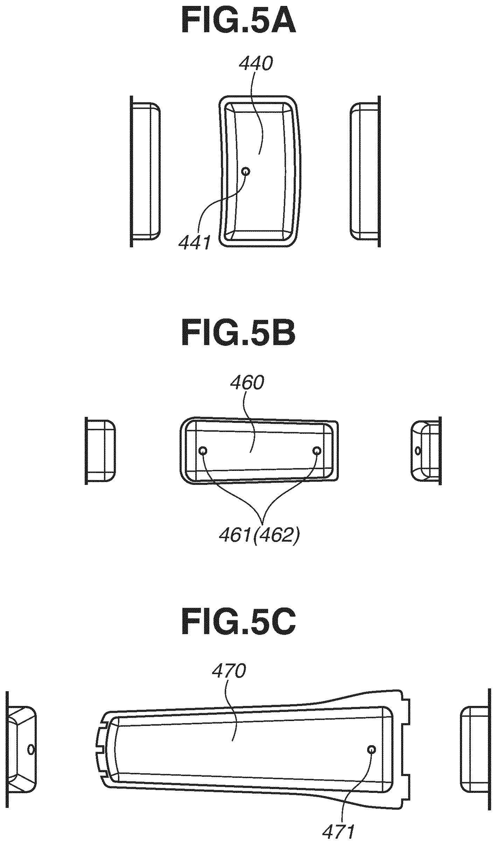

Figs. 5A, 5B, and 5C illustrate structures of a forehead pad 440, a temporal portion pad 460, and a frontal portion pad 470 according to a second exemplary embodiment. Fig. 5A illustrates the forehead pad 440. Fig. 5B illustrates the temporal portion pad 460. Fig. 5C illustrates the frontal portion pad 470. The forehead pad 440, the temporal portion pad 460, and the frontal portion pad 470 respectively include air escape holes 441, 461 (462), and 471. The number of air escape holes formed in the temporal portion pad 460 is larger than the number of air escape holes formed in the other pads, so that the amount of air discharged from the temporal portion pad 460 to the outside per unit time during the mounting operation is larger than the amount of air discharged from each of the other pads. Therefore, the speed at which the temporal portion pad 460 is crushed is faster than the speed at which the other pads are crushed.

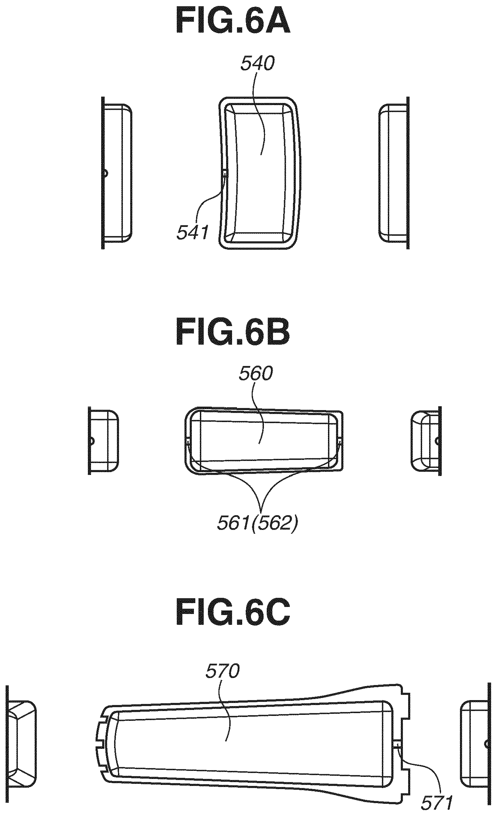

Figs. 6A, 6B, and 6C illustrate structures of a forehead pad 540, a temporal portion pad 560, and a frontal portion pad 570, in which the positions of the air escape holes are changed. Fig. 6A illustrates the forehead pad 540. Fig. 6B illustrates the temporal portion pad 560. Fig. 6C illustrates the frontal portion pad 570. Air escape holes 541, 561 (562), and 571 are respectively formed in side surfaces of the forehead pad 540, the temporal portion pad 560, and the frontal portion pad 570. The number of air escape holes formed in the temporal portion pad 560 is larger than the number of air escape holes than the number of air escape holes formed in the other pads, so that the amount of air discharged from the temporal portion pad 560 to the outside per unit time during the mounting operation is larger than the amount of air discharged from each of the other pads. Therefore, the speed at which the temporal portion pad 560 is crushed is faster than the speed at which the other pads are crushed.

Further, the air escape holes 541, 561 (562), 571 in the forehead pad 540, the temporal portion pad 560, and the frontal portion pad 570 are located in positions that are not in contact with the head portion of the user. Accordingly, air can reliably be discharged.

Therefore, the distance between the eyes of the user and the image display unit 100 can be set to a predetermined distance without making the user feel uncomfortable in the head mounted device according to the present exemplary embodiment, as in the head mounted device according to the first exemplary embodiment.

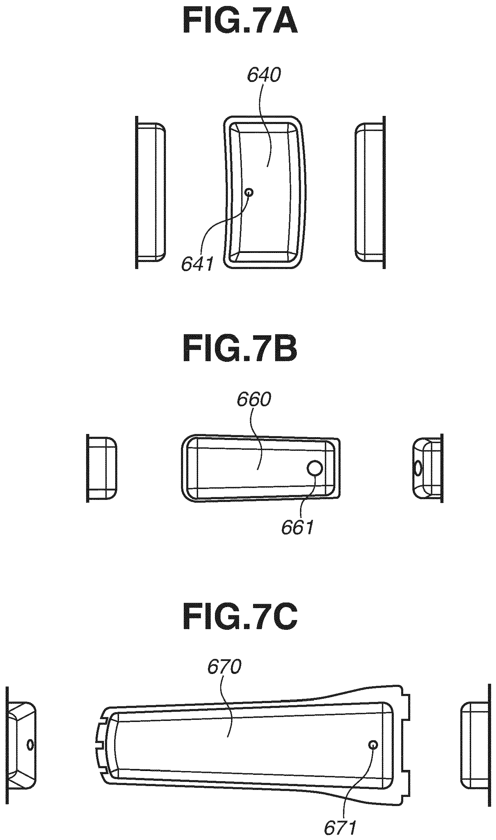

Figs. 7A, 7B, and 7C illustrate a pad 640, a temporal portion pad 660, and a frontal portion pad 670 according to a third exemplary embodiment. Fig. 7A illustrates the forehead pad 640. Fig. 7B illustrates the temporal portion pad 660. Fig. 7C illustrates the frontal portion pad 670. Air escape holes 641, 661, and 671 are respectively formed in the forehead pad 640, the temporal portion pad 660, and the frontal portion pad 670. The diameter (area) of the air escape hole 661 in the temporal portion pad 660 is larger than the respective diameters of the air escape holes 641 and 671 in the other pads, so that the amount of air discharged from the temporal portion pad 660 to the outside per unit time during the mounting operation is larger than the amount of air discharged from each of the other pads. Therefore, the speed at which the temporal portion pad 660 is crushed is faster than the speed at which the other pads are crushed.

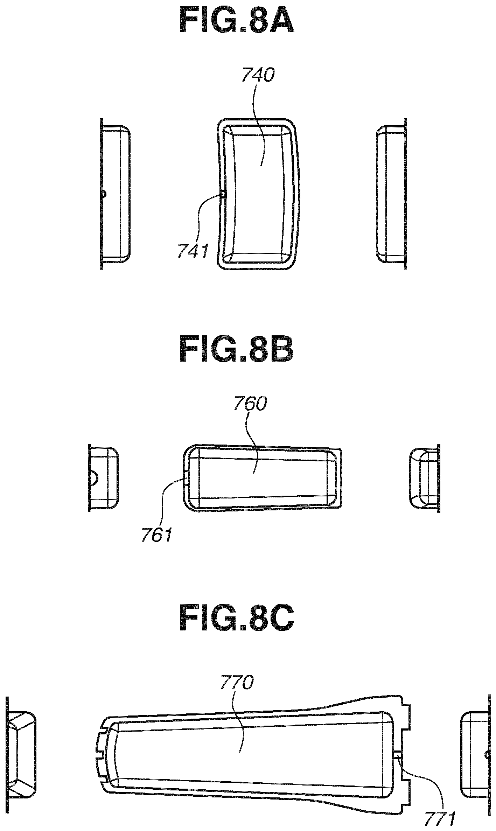

Figs. 8A, 8B, and 8C illustrate a forehead pad 740, a temporal portion pad 760, and a frontal portion pad 770, in which the positions of the air escape holes are changed. Fig. 8A illustrates the forehead pad 740. Fig. 8B illustrates the temporal portion pad 760. Fig. 8C illustrates the frontal portion pad 770. Air escape holes 741, 761, and 771 are respectively formed in side surfaces of the forehead pad 740, the temporal portion pad 760, and the frontal portion pad 770. The diameter of the air escape hole 761 in the temporal portion pad 760 is larger than the respective diameters of the air escape holes 741 and 771 in the other pads, so that the amount of air discharged from the temporal portion pad 760 to the outside per unit time during the mounting operation is larger than the amount of air discharged from each of the other pads. Therefore, the speed at which the temporal portion pad 760 is crushed is faster than the speed at which the other pads are crushed. Further, the air escape holes 741, 761, and 771 in the forehead pad 740, the temporal portion pad 760, and the frontal portion pad 770 are located in positions that are not in contact with the head portion of the user. Accordingly, air can reliably be discharged.

Therefore, the distance between the eyes of the user and the image display unit 100 can be set to a predetermined distance without making the user feel uncomfortable in the head mounted device according to the present exemplary embodiment, as in the head mounted device according to the first exemplary embodiment.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

This application is a divisional application of European patent application number EP17151071.2 (the "parent application"), as published under number EP3196687. The original claims of the parent application are repeated below as clauses of the present specification, which form part of the content of this divisional application as filed. The claims of this application are identified as such.
1. A head mounted device configured to be mounted on a head portion of a user when used, the head mounted device comprising:
   display means (100) for displaying an image to the user;
   mount means (200) for mounting the display means on the head portion of the user; and
   a holding member (260; 360; 440, 460, 470; 540, 560, 570; 640, 660, 670; 740, 760, 770) provided to the mount means and configured to hold the head portion of the user with respect to the mount means (200),
   wherein the holding member includes an elastic member (P1) and a packaging member (P3) enclosing the elastic member (P1), and an air escape hole (261; 361; 441, 461, 462, 471; 541, 561, 562, 571; 641, 661, 671; 741, 761, 771) is formed in the packaging member (P3).
2. The head mounted device according to clause 1, wherein the air escape hole (361; 541, 561, 562, 571; 741, 761, 771) is formed in a position that is not in contact with the head portion of the user when the head portion of the user is held by the holding member (360; 540, 560, 570; 740, 760, 770) .
3. The head mounted device according to clause 1 or clause 2, wherein a plurality of air escape holes (461, 462; 561, 562) is formed in the packaging member (P3).
4. The head mounted device according to any preceding clause, wherein the holding member includes a forehead holding member (240; 340; 440; 540; 640; 740) and temporal portion holding members (260; 360; 460; 560; 660; 760).
5. The head mounted device according to clause 4, wherein the holding member further includes a frontal portion holding member (270; 370; 470; 570; 670; 770).
6. The head mounted device according to clause 4 or clause 5, wherein the holding member further includes an occipital portion holding member (250).
7. The head mounted device according to any one of clauses 4 to 6, wherein the escape hole (261; 361; 461, 462; 561, 562; 661; 761) is formed in the respective temporal portion holding members (260; 360; 460; 560; 660; 760).
8. The head mounted device according to any one of clauses 4 to 6, wherein the escape hole is formed in the forehead holding member (440; 540) and in the temporal portion holding members (460; 560), and
   wherein a number of the escape holes (461, 462; 561, 562) formed in the respective temporal portion holding members (460; 560) is larger than a number of the escape holes (441, 541) formed in the forehead holding member (440; 540).
9. The head mounted device according to any one of clauses 4 to 6, wherein the escape hole is formed in the forehead holding member (640; 740) and in the temporal portion holding members (660; 760), and
   wherein an area of the escape hole (661; 761) formed in the respective temporal portion holding members (660; 760) is larger than an area of the escape hole (641; 741) formed in the forehead holding member (640; 740).
10. The head mounted device according to any one of clauses 4 to 9, wherein when the head mounted device is mounted on the user, a speed at which the respective temporal portion holding members (260; 360; 460; 560; 660; 760) are crushed is faster than a speed at which the forehead holding member (240; 340; 440; 540; 640; 740) is crushed due to the fact that pressing force between the head mounted device and the head portion of the user discharges air in the holding member through the escape hole (261; 361; 441, 461, 462, 471; 541, 561, 562, 571; 641, 661, 671; 741, 761, 771).
11. The head mounted device according to any preceding clause, wherein when the head mounted device is mounted on the user, pressing force between the head mounted device and the head portion of the user discharges air in the holding member (260; 360; 440, 460, 470; 540, 560, 570; 640, 660, 670; 740, 760, 770) through the escape hole (261; 361; 441, 461, 462, 471; 541, 561, 562, 571; 641, 661, 671; 741, 761, 771).
12. The head mounted device according to any preceding clause, wherein the elastic member (P1) is foamable polyurethane.

## Claims

1. A head mounted device configured to be mounted on a head portion of a user when used, the head mounted device comprising:
display means (100) for displaying an image to the user;
mount means (200) for mounting the display means on the head portion of the user; and
a holding member (260; 360; 440, 460, 470; 540, 560, 570; 640, 660, 670; 740, 760, 770) provided to the mount means and configured to hold the head portion of the user with respect to the mount means (200), the holding member including a forehead holding member (240; 340; 440; 540; 640; 740) and a head portion holding member (260, 270; 360, 370; 460, 470; 560, 570; 660, 670; 760, 770) configured to hold a head portion other than a forehead,
wherein the holding member includes an elastic member (P1) and a packaging member (P3) enclosing the elastic member (P1), and an air escape hole (261; 361; 441, 461, 462, 471; 541, 561, 562, 571; 641, 661, 671; 741, 761, 771) is formed in the packaging member (P3),
wherein the packaging member (P3) is substantially impermeable to air,
wherein the air escape hole is formed in the forehead holding member (640; 740) and in the head portion holding member (660; 760), and
wherein an area of the air escape hole (661; 761) formed in the head portion holding member (660; 760) is larger than an area of the air escape hole (641; 741) formed in the forehead holding member (640; 740).

2. The head mounted device according to claim 1, wherein the air escape hole (361; 541, 561, 562, 571; 741, 761, 771) is formed in a position that is not in contact with the head portion of the user when the head portion of the user is held by the holding member (360; 540, 560, 570; 740, 760, 770) .

3. The head mounted device according to claim 1 or claim 2, wherein a plurality of air escape holes (461, 462; 561, 562) is formed in the packaging member (P3).

4. The head mounted device according to any preceding claim, wherein the holding member further includes a frontal portion holding member (270; 370; 470; 570; 670; 770).

5. The head mounted device according to any preceding claim, wherein the holding member further includes an occipital portion holding member (250).

6. The head mounted device according to any preceding claim, wherein the air escape hole (261; 361; 461, 462; 561, 562; 661; 761) is formed in the head portion holding member (260; 360; 460; 560; 660; 760).

7. The head mounted device according to any preceding claim, wherein the air escape hole is formed in the forehead holding member (440; 540) and in the head portion holding member (460; 560), and
wherein a number of the air escape holes (461, 462; 561, 562) formed in the head portion holding member (460; 560) is larger than a number of the air escape holes (441, 541) formed in the forehead holding member (440; 540).

8. The head mounted device according to any preceding claim, wherein when the head mounted device is mounted on the user, a speed at which the head portion holding member (260; 360; 460; 560; 660; 760) is crushed is faster than a speed at which the forehead holding member (240; 340; 440; 540; 640; 740) is crushed due to the fact that pressing force between the head mounted device and the head portion of the user discharges air in the holding member through the air escape hole (261; 361; 441, 461, 462, 471; 541, 561, 562, 571; 641, 661, 671; 741, 761, 771) .

9. The head mounted device according to any preceding claim, wherein when the head mounted device is mounted on the user, pressing force between the head mounted device and the head portion of the user discharges air in the holding member (260; 360; 440, 460, 470; 540, 560, 570; 640, 660, 670; 740, 760, 770) through the air escape hole (261; 361; 441, 461, 462, 471; 541, 561, 562, 571; 641, 661, 671; 741, 761, 771).

10. The head mounted device according to any preceding claim, wherein the elastic member (P1) is foamable polyurethane.
